Europäisches Patentamt

(19) European Patent Office

Office européen des brevets

(11) Publication number: **0 454 421 A2**

# (12) EUROPEAN PATENT APPLICATION

(21) Application number: **91303650.5**

(22) Date of filing: **23.04.91**

(51) Int. Cl.⁵: **H04M 3/42, H04Q 3/62, H04M 11/00**

(30) Priority: **23.04.90 GB 9009100**

(43) Date of publication of application:
**30.10.91 Bulletin 91/44**

(84) Designated Contracting States:
**DE FR GB IT NL SE**

(71) Applicant: **SOUTHWESTERN BELL TELECOM (UK) LTD.**
**Harlequin Centre, Southall Lane**
**Southall, Middlesex UB2 5NH (GB)**

(72) Inventor: **Churchman, Jim Tetrel Techn. Ltd.**
**Royal Mint**
**Industrial Estate, Llantrisant**
**Mid Glamorgan, CF7 8LF (GB)**

Inventor: **Docherty, Brian Tetrel Techn. Ltd.**
**Royal Mint**
**Industrial Estate, Llantrisant**
**Mid Glamorgan, CF7 8LF (GB)**
Inventor: **Maidment, Kevin Tetrel Techn. Ltd.**
**Royal Mint**
**Industrial Estate, Llantrisant**
**Mid Glamorgan, CF7 8LF (GB)**
Inventor: **King, John Southwestern Bell**
**Telecom (UK) Ltd.**
**Harlequin Centre, Southall Lane, Southall**
**Middlesex, UB2 5NH (GB)**
Inventor: **Ahmed, Zahir Southwestern Bell**
**Telecom (UK) Ltd.**
**Harlequin Centre, Southall Lane, Southall**
**Middlesex UB2 5NH (GB)**
Inventor: **Carter, Stephen Southwestern Bell**
**Freedom Phone**
**7486, Shadeland Station Way Indianapolis**
**Indiana 46256 (US)**

(74) Representative: **Milhench, Howard Leslie et al**
**R.G.C. Jenkins & Co. 26 Caxton Street**
**London SW1H 0RJ (GB)**

(54) **Improvements relating to telecommunications equipment.**

㊾ A private branch exchange (PBX) telecommunications facility for small business or domestic applications where only a limited number of exchange lines (say one or two) are required to be connected to a greater but still limited number of extensions (say five to eight) is constructed around a solid state crosspoint switch to which the exchange and extension lines are connected and has a user programmable microprocessor controlling the switch operation to provide multiple user facilities in addition to providing access between the exchange lines and the extensions, such facilities including call diversion, call transfer, alarm calls, delayed automatic redialling, abbreviated dialling, call holding, call waiting alerts and call intrude. The PBX includes DTMF receivers and a DTMF generator and tone generators whereby both loop disconnect telephones and DTMF telephones, with and without recall, can be utilized at the extension sites. A speech synthesizer is provided for user interaction and the microprocessor has ports for data logging peripherals, alarms such as smoke or fire detectors, and door controls. Intercom circuits are coupled to the switch matrix to enable any extension telephone to be utilized as a baby alarm for example.

EP 0 454 421 A2

## Field of the Invention:

This invention concerns improvements relating to telecommunications equipment, and more particularly concerns an improved single line PBX (Private Branch Exchange) for small business and domestic applications.

## Background of the Invention:

Currently available single line PBX's provide only a very limited feature set to the user, often limited to call transfer, intercom calling, exchange line calling and ringer on off. Most existing single line systems are pulse dialling only and do little more than expand the number of telephones that can be handled by one line and provide some form of internal calling between these extensions. Even such limited feature sets as are provided in current PBX's are not provided in such a way that it is apparent to a user that a feature has been invoked, and few of the currently available single line PBX's provide even the most rudimentary user feedback.

## Summary of the Invention:

The present invention aims to provide a PBX which avoids or at least substantially reduces the abovementioned disadvantages of currently available single line PBX's.

According to the present invention as viewed from one aspect there is provided a private branch exchange (PBX) telecommunications apparatus for small business or domestic applications, said apparatus comprising a solid state crosspoint switch matrix defining connection sites for a limited number of exchange lines and a greater number of extensions, a microprocessor coupled to the switch matrix for determining the operation thereof to provide a plurality of user selectable features, call signalling means coupled to the switch matrix and to the microprocessor to be controlled thereby, a plurality of extension port circuits each coupled to a respective extension connection site of the switch matrix, and controls for said extension port circuits coupled to the microprocessor.

According to another aspect the present invention provides a private branch exchange (PBX) telecommunications apparatus for small business or domestic applications, said apparatus comprising a solid state crosspoint switch matrix defining connection sites for a limited number of exchange lines and a greater number of extensions, a microprocessor having ROM and RAM facilities coupled to the switch matrix for determining the operation thereof under software control, dual tone multi-frequency (DTMF) receivers and tone generators and a DTMF generator coupled to the switch matrix and to the microprocessor to be controlled thereby, a plurality of extension port circuits each coupled to a respective extension connection site of the switch matrix, and controls for said extension port circuits coupled to the microprocessor.

Hereinafter described is an exemplary embodiment of the invention which provides to the domestic or small business user a comprehensive feature set which, as a basic function, provides access to incoming or outgoing exchange line telephone calls from multiple extension telephone sites and provides intercom call facilities between the extension sites, and supplements these core facilities with a suite of call management facilities allowing call diversion, call transfer, alarm calls, delayed automatic redialling, abbreviated dialling of stored numbers, call holding, call waiting alerts and call intrude. Additionally, the described PBX provides features associated with safety and premises management including interfaces to other hardware peripherals such as smoke alarms, door entry controls and intercom (baby listening) facilities, and to provide for call logging from a serial port.

A single or limited exchange line PBX in accordance with the present invention preferably is provided with two separate means for confirming features, status and availability to the user, namely a standardized tone set and a synthetic speech set. The standardized tone set includes a dial tone confirming the availability of a free extension highway for connection to another extension or the exchange line, a ring return tone confirming that a dialled extension has been rung, and an engaged/unavailable tone confirming that a dialled extension or the exchange line is in use or that a telephone number or facility is not available, and these tones will preferably be designed to mimic their public exchange counterparts so that they may be easily recognised by the untrained user. The synthetic speech set employs synthetic speech to prompt the user and to confirm settings when the more sophisticated call management facilities are being used. The synthetic speech facility may also be used to provide information to distant callers connected to the exchange line, and may include a telephone answering machine facility having a repertoire of user terminated messages.

A further optional though preferred feature of the present invention is that the subject single line PBX should advantageously be compatible with different dialling type telephones. Thus, for example, the subject PBX should work with both loop disconnect (pulse) dialling telephones and MF (tone) dialling telephones, though it is proposed that an MF dialling telephone shall be required as the master telephone of the PBX system, namely the telephone that is to be used to program the core system options that are available. The PBX should also be capable of mixed mode dialling for Mercury access etc.

The exemplary embodiment of the invention which is described hereinafter is designed to support one exchange line and five extensions in its basic configuration, this basic configuration being derived from an extended option configuration supporting two exchange lines and up to eight extensions and with core sections of the PBX hardware designed to satisfy the requirements of the extended configuration. At the core of the PBX hardware is a solid state crosspoint switch matrix to which the exchange line(s) and the six (or eight) extension telephones are connected, and the status of the switch matrix is determined under software control by means of a microprocessor having ROM and RAM facilities and providing various port configurations. Also provided in the PBX and connected to the switch matrix are a speech synthesizer, DTMF receivers and tone generators and a DTMF generator, and various intercom circuits.

The above and further features of the present invention are set forth with particularity in the appended claims and in the following an exemplary embodiment of the invention will be described in detail and by way of example only with reference to the accompanying drawing.

Description of the Drawing:

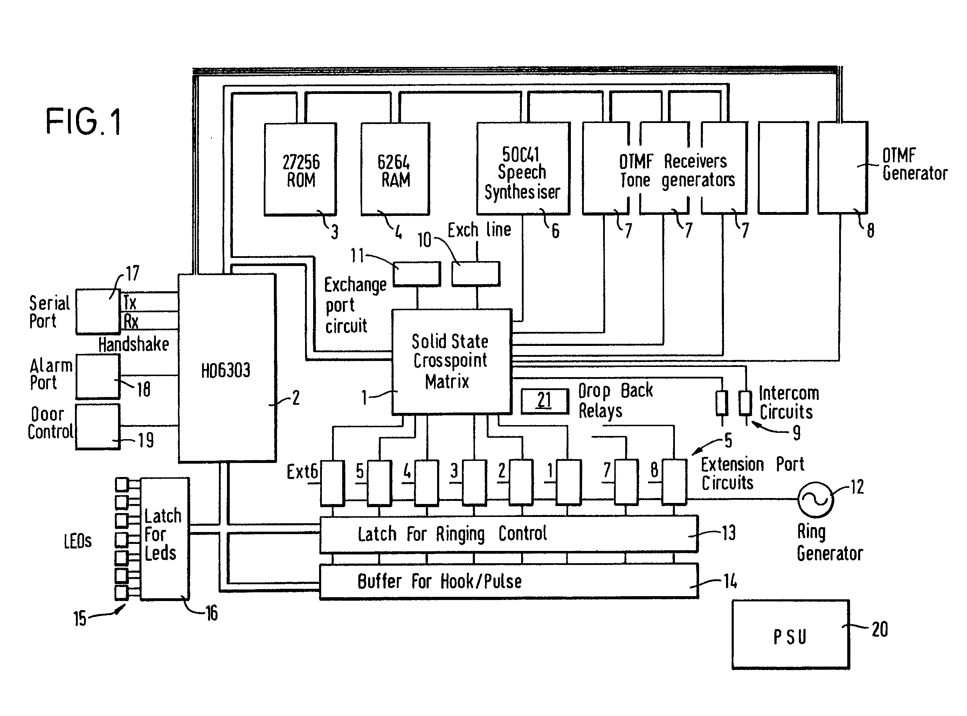

The single figure, Figure 1, is a schematic block diagram representation of a PBX apparatus according to an embodiment of the present invention.

Description of the Embodiment:

As shown in Figure 1, a PBX embodying the present invention is configured as a 2 plus 8 PBX, namely accommodating two exchange lines and eight extensions, which can be de-populated to provide the facilities of a 1 plus 5 PBX. At the heart of the embodiment is a solid state crosspoint switch matrix 1 which is software controlled via a microprocessor 2 having ROM and RAM facilities 3 and 4. Extension port circuits 5 marked Ext 1 through 8 are shown coupled to the matrix 1, as are a speech synthesizer 6, DTMF receivers and tone generators 7 and a DTMF generator 8 all coupled to the microprocessor 2 to be controlled thereby. The matrix 1 further has connected thereto intercom circuits 9 for coupling to intercom facilities such as a baby alarm for example. The exchange line is coupled to the matrix at 10 and there is additionally an exchange port circuit 11. A ring generator 12 couples to each of the extension port circuits 5 and software controlled latches and buffers for the extension port circuits 5 are designated 13 and 14. A bank 15 of LED's provides status indications, again under software control via latches 16, and the microprocessor 2 has a serial port 17 for connection of call logging facilities if desired, and alarm and door control ports 18 and 19 respectively. A power supply unit 20 is included and drop back relays 21 ensure the connection of the master telephone to the exchange line in the event of a power failure situation. Further details of the illustrated PBX are provided in the following hardware and system software descriptions.

The switching matrix 1 is based on a solid state crosspoint switch matrix which provides greater reliability, lower noise and electrical interference than the relay switching matrices found on most single line call routers. The central processing for the switch matrix is provided by a HD 6303 microprocessor 2. This device is rich in I/O, has a built in serial port to allow connection of the logging peripherals and is sufficiently fast to support the switch. External ROM and RAM are provided on the processor bus. This will allow feature upgrades via replacement EPROM. On the five extension version of the PBX three DTMF highways are provided, and during an internal or an external call a DTMF detector is always available to the call to allow feature invocation. The PBX unit is able to provide proceed indication (dial tone) and busy signals to each extension port as necessary in a way which maintains signal isolation between all extensions receiving these tones.

Hookswitch activity and loop disconnect pulsing is sensed on a per extension basis at each of the extension port circuits 5. A single DTMF dialler 8 is available for the outgoing port, thus regardless of the internal dialling type used at any extension the outgoing dialling type can be configured to be loop disconnect or DTMF. The speech synthesizer 6 is available on a highway and provides confirmation of feature settings and a limited repertoire answer machine facility.

As can be seen unlike many small switches the switching path is not transparent to signalling. This is necessary to support DTMF dialling on the outgoing port while loop disconnect dialling is supported at an extension port.

As previously mentioned herein, the PBX hardware should desirably support loop disconnect telephones or DTMF telephones with or without recall as the extension instruments. Potential purchasers of the subject PBX will inevitably already own at least one or two instruments which can be used as extensions, requiring say only two or three additional telephones to be purchased for a fully configured system. State of today's art products like the BT Renown will only support DTMF telephones with recall (to allow exchange line access) so that any existing instruments in all domestic situations will be redundant (they will be predominantly loop disconnect, they will almost certainly be without recall) and the total system cost is therefore pushed up. In contrast, the subject PBX provides guaranteed inter-working with existing instruments including all cordless telephones.

The intercom highways are provided with some shunt loss to lower sidetone levels and make talker levels more natural. As mentioned the extension circuits provide detection of loop disconnect pulsing, timed break recall and hookswitch state, and they also provide a constant current feed for the telephones and allow switching and cadencing of ringing. The use of a non standard ringer configuration which puts non excessive {BS6301} ac ringing voltage onto the ring wire of the extension port with respect to wire 5, without affecting the dc loop voltage, saves on hardware cost and allows secondary sockets to be used for extension connection. Secondary sockets are more readily available than the primary (master) sockets and are approximately 30% cheaper than primary sockets. Interconnection of these sockets to the main printed circuit board of the PBX is via insulation displacement connection (IDC) pillars. This method of connection is consistent with the way that the cable will be terminated at the extension socket end. Many DIY wiring kits include a disposable IDC tool to facilitate connection to these pillars.

Interfaces are provided for several peripherals and these include a serial interface 17 for a low cost printer or personal computer to provide call logging, and hardware interfaces 18 and 19 for smoke alarms and door releases. LED indicators 15 are also provided showing extension and exchange port status.

One of the telephones connected to the system needs to be DTMF or dual dialling with Timed Break Recall as this will be used as the "system phone". This telephone configures certain of the system facilities which are not necessarily available on a per extension basis and needs Timed Break Recall, * and # keys. Alteration of system facilities is only possible having entered a PIN.

Power is derived via a mains transformer, with one winding providing ringing at 50Hz. Regulators supply all logic circuitry. Relays 21 provide a dropback facility at extension one during mains power failure.

Extension ports supply a constant current feed to extension telephones on wires 2 & 5. This current shall be nominally 30 mA. The voltage limit on these ports will be 30Vdc. Ringing signal shall be applied to the ring wire of the extension port wrt wire 5 and will be 40V rms 50 Hz and will drive loads of up to REN 4. The alarm input port 18 accepts inputs of either polarity and has a threshold of no more than 6V dc. It draws no more than 2mA from a source of 9Vdc. This port is intended to connect to a BRK Electronics smoke detector type no. 83RI-UK and is desirably isolated using an optoisolator. The door entry control port 19 also is an isolated port suitable for the control of a door release mechanism. The logger port 17 is a fixed baud rate serial isolated port using TX (transmit), RX (receive), handshake, and ground (isolated) conductors.

The operation of the PBX as abovedescribed is determined by the software controlling the microprocessor operations and will be apparent to those possessed of the relevant skills from a reading of the following pages which represent a software and user interface specification for the PBX which is identified in the following pages by the name "Gouda". The following specification details facilities available to extension users, facilities controlled by system phone programming and available at extensions, facilities available to external callers, system phone programming, and facilities controlling or activated by external peripherals. As will be appreciated from a review of the following specification, the subject exemplary PBX according to the present invention possesses a comprehensive range of telecommunications facilities not hitherto made available in a comparable single line PBX system and in addition provides clock and alarm call facilities, the facility to designate any telephone as a baby alarm extension whereby with the handset of the designated telephone left off hook a listener can call the designated extension from any other telephone and be connected thereto without ringing (the listeners telephone can be a telephone with monitor or a loud speaking telephone with the mute switched on), answering machine and fax facilities, and facilities associated with external peripherals such as smoke and PIR (Passive Infra Red) detectors and door entry controls.

## FACILITIES AVAILABLE TO EXTENSION USERS

The following provides a detailed description of the use of the various Gouda extension features:

### Making an Exchange Line Call - exchange line available

The user lifts the handset, internal dial tone shall be heard in the receiver (when an extension highway is available - which should appear almost instantaneously). The user then keys 9, public exchange dial tone shall be heard almost immediately. Having heard public exchange dial tone the user can then key the remaining digits of the required telephone number.

At the end of the call replacing the extension handset shall clear the exchange line. The exchange line will be released for a minimum of 1 second to ensure proper clearing and to allow for ring detection.

### Making an Exchange Line Call - exchange line unavailable

The user lifts the handset, internal dial tone shall be heard in the receiver (when an extension highway is available - which should appear almost instantaneously). The user then keys 9, internal engaged tone shall be returned to the user as the exchange line is in use. Replacing the handset shall clear the attempted call set up. If the user keeps their handset raised then public exchange dial tone shall be returned when the exchange line is free.

## Making an extension call - extension available

The user lifts the handset, internal dial tone shall be heard in the receiver (when an extension highway is available - which should appear almost instantaneously). The user then keys the required extension number (from 20 to 24 on the single line product), ring return tone shall be returned to the user and the target extension shall be rung. When the call is answered the two extensions shall be interconnected.

The call may be cleared by replacing either handset. When the handset is replaced at one end of the call then internal dial tone shall be returned to the other end of the call.

## Making an extension call - extension unavailable

The user lifts the handset, internal dial tone shall be heard in the receiver (when an extension highway is available - which should appear almost instantaneously). The user then keys the required extension number (from 20 to 24 on the single line product), engaged tone shall be returned to the user as the target extension is busy. If the caller continues to keep their handset raised and the target extension finishes their call in progress then the telephone of the target extension shall be rung, ring tone will be returned to the caller, and both parties shall be connected on answer.

Replacing the handset shall clear the attempted call setup.

## Answering an external call

An external call shall cause designated extensions (those with their ringers enabled) to ring. This ringing shall be differentiated in cadence from the ringing caused by an internally originated call. The call is answered quite simply by lifting the handset on a ringing extension, or by raising the handset and dialling 8 on a non ringing handset.

The exchange line call shall be cleared when the extension handset and the handset at the distant end of the call are replaced.

## Answering an internal call

An internal call shall cause a designated extension to ring. This ringing shall be differentiated in cadence from an externally originated call. The call is answered by lifting the handset on the ringing extension.

The call may be cleared by replacing either handset. When the handset is replaced at one end of the call then internal dial tone shall be returned to the other end of the call.

## Transferring an external call - target extension available

An external call may be transferred to an alternative extension to the one at which it was answered. To do this from an MF extension the user presses recall, hears internal dial tone, and then keys the required extension number (from 20 to 24 on the single line product), ring return tone shall be returned to the user and the target extension shall be rung. To do this from an LD extension the user keys 1, hears internal dial tone, and then keys the required extension number (from 20 to 24 on the single line product), ring return tone shall be returned to the user and the target extension shall be rung. When the call is answered the two extensions shall be interconnected. During this process the exchange line shall be held with an accompanying reminder/confidence tone transmitted to the caller. When either of the extension users replace the handset the other shall be automatically connected to the held exchange line. If both extension users replace their handsets then the call shall be assumed to be cleared.

The transferred call shall clear when the extension users handset is replaced.

## Transferring an external call - target extension unavailable

An external call may be transferred to an alternative extension to the one at which it was answered. To do this from an MF extension the user presses recall, hears internal dial tone, and then keys the required extension number (from 20 to 24 on the single line product), engaged tone shall be returned to the user if the target extension is busy. To do this from an LD extension the user keys 1, hears internal dial tone, and then keys the required extension number (from 20 to 24 on the single line product), again engaged tone shall be returned to the user if the target extension is busy. During this process the exchange line shall be held with an accompanying reminder/confidence tone transmitted to the caller. Keying recall at an MF extension (or 1 at an LD extension) shall reconnect the extension user to the exchange line. If the extension user replaces his handset when the exchange line is held then the system shall automatically ring that extension user and when the handset is lifted connect him to the held exchange line.

This call shall clear when the extension user's handset is replaced.

## Shuttle on an internal call

If the user is engaged on an internal extension call and wishes to make an enquiry call to another extension then he can key recall, hear internal dial tone, and key the target extension number (or use the 1 - dial tone - extension number sequence on an LD telephone). The extension shall ring or engaged tone shall be returned if the extension is already busy. On answer the parties are connected. If the extension user keys recall (or 1 on an LD telephone) then he shall be reconnected to the original extension.

## Shuttle on an external call

If the user is engaged on an external call and wishes to make an enquiry call to another extension then he can key recall, hear internal dial tone, and key the target extension number (or use the 1 - dial tone - extension number sequence on an LD telephone). The extension shall ring or engaged tone shall be returned if the extension is already busy. On answer the parties are connected. If the MF extension user keys recall, (or 1 on an LD telephone) then he shall be reconnected to the external call. Whilst the exchange line call is held a confidence tone shall be transmitted to the distant caller.

If the target extension was busy and engaged tone heard then keying recall, (or 1 on an LD telephone) shall return the external call.

## Ring Back

If a user attempts to connect to an internal extension and hears engaged tone he can set up a "ring back" feature. The system shall attempt to connect both callers when they are free. To use this feature upon hearing engaged tone at an MF extension the user can key recall, which shall return internal dial tone, he can then key 70 and hang up. At an LD extension the user can key 1 followed by 70 and then hang up.

When the target extension user has finished his call the system shall ring the first extension user, upon answer the system shall ring the target extension user and connect both parties on answer

## Delayed Automatic Redialling

If an extension user attempts to set up an external call and finds the number is engaged they can use a system feature to automatically redial the call in five minutes. To do this at an MF extension the user can press Recall, hear internal dial tone, and key 75, the system shall confirm:
*"Redial Reminder"*
as a spoken message. Similarly at an LD extension the sequence shall be 1 -dial tone -75.

Using either programming method in five minutes (or a greater time if the exchange line is busy in five minutes) the system shall ring the originating extension. When answered the system shall announce:

*"Re - Dialling"*
the extension user shall be connected to the exchange line at the completion of re dialling.

If the extension is unanswered after 5.12 seconds of ringing the redial attempt is abandoned.

## Dialling a Stored Number

An extension user may dial one of 20 system stored telephone numbers (of 24 digits length). To do this the extension user lifts the handset, waits for dial tone, and keys a number from 30 to 49 representing a stored telephone number. The system shall confirm:
*"Dialling"*
and dial the required target number and connect the extension user to the exchange line when dialling has been completed. The system shall return engaged tone to the extension user if the exchange line is busy. The user can, if he wishes, make use of the redial feature if the exchange line is in use.

## Do not Disturb - internal calls

An extension user can prevent the local telephone from being rung by internal calls at a particular extension by raising the handset at that extension, waiting for dial tone and keying 72. The system shall respond;
*"Internal Ring on (or off)"*
depending on the previous state of the setting.

## Do not Disturn - external calls

An extension user can prevent the local telephone from being rung by external calls at a particular extension by raising the handset at that extension, waiting for dial tone and keying 79. The system shall respond;
*"External Ring on (or off)"*
depending on the previous state of the setting.

## External call waiting

If an external call is unanswered after five seconds of ringing, and there is an internal call in progress the spoken message:
*"Incoming Call"*
shall be heard by the extension users engaged in the internal call. The external call can be taken in the usual way (recall - dialtone - 9 or 1 - dialtone - 9 at an LD extension), Alternatively one user can hang up and can then lift the ringing handset.

## Internal intrude in to external or internal call

An extension user may attempt to intrude in to a call in progress by keying recall 71 (or 1-71 on an LD telephone) when engaged tone has been returned.

The message

*"Ding Dong 22" (or relevant extension number)* shall be heard by the parties to the call in progress. The extension user engaged in the internal call may talk to the intruding party in the usual way - Recall, extension number (1 - extension number on an LD telephone). If the call in progress had been with an external call then this action shall hold the exchange line call with transmitted confidence tones.

## Clock Facility

An extension user may hear the current time by raising the handset, waiting for dial tone and keying 73.

This system shall speak the current time in 12 hour format with an am or pm terminator.

## To Set an Alarm Call

An extension user may set an alarm call at that extension by raising the handset, waiting for dial tone and keying 74.

This shall produce the system prompt:

*"Program the Alarm time"* the user can then key 9 (representing 9am), 955 or 0955 (representing 09:55 am) or any designated 24 hour time. 2.56 seconds of keying inactivity shall confirm:

*"Nine fifty five am"* in 12 hour format with am or pm indications.

The user can then replace his handset.

For rapid set up of the alarm call the experienced user can key 74955 and hang up without waiting for or listening to any prompts or confirmation. If a mistake is made the user shall hang up and key the complete sequence again.

## To cancel an alarm call

An extension user may cancel a previously set alarm call at a particular extension by raising the handset, waiting for dial tone and keying 74.

The system shall prompt:

*"Alarm Off"* keying 74 again shall prompt :

*"Alarm On"* the handset may then be replaced. As previously there is no need for the user to await the confirmation.

## Alarm Call and Repeating the Alarm call

At the designated alarm time the system shall ring the extension until answered (or for a maximum of 20 seconds). Upon answer the system shall prompt:

*"Alarm Call"*

The alarm call will repeat at the same time the next morning unless the user has disabled the alarm by keying 74 before replacing the handset when receiving the alarm call.

## Call Diversion

A call diversion facility may be set up at a particular extension. This shall transfer all calls designated for that extension to an alternative extension or to an external number. To invoke the facility the extension user raises his handset, awaits dial tone, and keys 76 followed by the target extension number (20 -24) or the target external number (90614452313). Following 2.56 seconds of keying inactivity the switch shall confirm:

*"Divert set"*

The user may then replace his handset.

If that particular extension is then subsequently dialled then the calling party shall receive a message:

*"Divert set"* and the target extension or external number shall be dialled.

To cancel a divert at a particular extension, the extension user raises his handset, awaits dial tone, keys 76, and replaces the handset.

When the extension user raises the handset of an extension where a divert has been set they shall be greeted with the message:

*"Divert set"* before dial tone is returned.

## FACILITIES CONTROLLED BY SYSTEM PHONE PROGRAMMING AVAILABLE AT EXTENSIONS

The following provides a detailed description of the use of the various Gouda extension features which are set up on a per extension basis by system phone programming:

## Dialling a Barred Number

If a particular extension attempt to connect to a telephone number which has been barred to it by system phone programming it shall have number unavailable tone returned and the attempted call set up shall be cleared.

## Baby Alarm Extension

When an extension has been designated as a baby alarm extension by system phone programming then it may be left permanently off hook. When another extension user dials that extension they are automatically connected to the extension without ringing and can listen to events in the room.

## Power Fail Extension

During mains power failure extension 20 shall be connected directly to the exchange line (on the two line sytem the second line shall drop back to extension 21).

## FACILITIES AVAILABLE TO EXTERNAL CALLERS

When unattended, or unanswered, Gouda offers the following facilities to an external caller.

### Repertoire Answer Machine

When programmed to so by a system phone Gouda can automatically answer an external call and greet the caller with one of two informative messages.

Gouda shall answer after 3.5 seconds of ringing and greet the caller with the message:

*"I am sorry no one is available, please call after 4:00pm"*

the second clause of this message shall repeated three times and then the call shall be cleared.

Alternatively Gouda shall answer after 3.5 seconds of ringing and greet the caller with the message:

*"I am sorry no one is available, please call 0614452313*

the second clause of this message shall repeated three times and then the call shall be cleared. The spoken telephone number shall be ennuciated in a memorable way for example:

*061-445-2313*

or

*0252-83-77-12*

### Fax Switch Facility

When programmed to so by a system phone Gouda can automatically answer an external call and greet the caller with an informative message and either route the call to an answer machine connected to an extension, or to a fax machine at a different extension

Gouda shall answer after 3.5 seconds of ringing and greet the caller with the message:

*"I am sorry no one is available, please key star for the fax machine or wait for the answer machine"*

If the caller keys * the fax machine shall be rung, it shall auto-answer and a manually originated fax message can be left, if the caller keys nothing extension 24 shall be rung, the connected answer machine shall auto-answer and a message can be left.

On the two line version of the producs line 1 shall be dedicated to the answer machine and line 2 to the fax machine.

## SYSTEM PHONE PROGRAMMING

Certain of the programming facilities of the system are only available to a system phone. These include setting the time, programming the stored numbers, programming the autoanswer messages, designating ring groups, and call barring plans. Any extension with a connected MF telephone can be used as a system phone; however the system phone user needs to know a PIN code. System phone programming is completed by hanging up the telephone.

### Turning the Autoanswer message on

The system phone user lifts the handset, waits for dial tone, and keys *1515, the default PIN, the system prompts:

*"System Programming"*

the user keys 1 and the system responds:

*"Autoanswer On"*

the user can then replace the handset. As previously the user can key the complete sequence without waiting for prompts.

### Turning the Autoanswer message off

The system phone user lifts the handset, waits for dial tone, and keys *1515, the default PIN, the system prompts:

*"System Programming"*

the user keys 0 and the system responds:

*"Autoanswer Off"*

the user can then replace the handset. As previously the user can key the complete sequence without waiting for prompts.

### Setting the Autoanswer message

The system phone user lifts the handset, waits for dial tone, and keys *1515, the default PIN, the system prompts:

*"System Programming"*

the user keys 2 and the system responds:

*"Autoanswer message"*

The user can then key a number from 1-3.

### User Keys 1

If the user keys 1 the system shall prompt

*"I am sorry no one is available, please call after"*

the user then keys a time in abbreviated or full 24 how format, terminated with a #. The system shall then prompt

*"I am sorry no one is available, please call back at (entered time)"*

the user can then hangup, or key 1 to turn the autoanswer message on with immediate effect.

### User Keys 2

If the user keys 2 the system shall prompt:

*"I am sorry no one is available, please call"*
the user then keys a telephone number terminated with a #. The system shall then prompt:
*"I am sorry no one is available, please call (entered number)"*
the user can then hangup, or key 1 to turn the auto-answer message on with immediate effect.

## User Keys 3

If the keys 3 the system shall prompt
*"I am sorry no one is available please key star for the fax machine or wait for the answer machine"*
the user can then hangup, or key 1 to turn this auto-answer option on with immediate effect.

## Programming Number Stores

The system phone user lifts the handset, waits for dial tone, and keys *1515, the default PIN, the system prompts:
*"System Programming"*
the user keys 30 and the system responds:
*"Store 30"*
the user can then key the telephone number destined for the store, terminated with #. The system shall speak the stored number. The user can then key any other target store number between 30 and 49 and then program it the same way.

## Programming Call Barring

The system phone user lifts the handset, waits for dial tone, and keys *1515, the default PIN, the system prompt:
*"System Programming"*
the user keys 5 and the system responds:
*"Call Barring"*
the user then keys the extension number for which barring is being set eg 21, the system shall respond
*"Extension 21"*
The user then keys a call barring level between 0 and 3, the system shall respond
*"Level 2"*
other extensions can be programmed in an identical way.
The call barring levels correspond to:
0 all numbers allowed
1 no international (010) or premium calls (0898,0836,00..)
2 no national trunk calls (0..) - local only

## Designating a baby alarm extension

The system phone user lifts the handset, waits for dial tone, and keys *1515, the default PIN, the system prompts:
"System Programming"

the user keys 6 and the system responds:
"Baby Alarm"
the user then keys the extension number at which the baby alarm service is required for example 24, the system shall then confirm:
"Extension 24"

## MERCURY PROGRAMMING

Having stored a ten digit Mercury access code from the system phone all requisite (where there is a financial advantage) calls can be routed via Mercury. This will be transparent to the user who will key only the national telephone number.

## PIN Programming

The system phone user lifts the handset, waits for dial tone, and keys *1515, the default PIN, the system prompts:
"System Programming"
the user keys 8 and the system responds:
"PIN"
the user then keys the new required four digit PIN (excluding or including the required initial *). The system shall then confirm the entered PIN.

## UNIT CHARGE PROGRAMMING

The system phone user lifts the handset, waits for dial tone, and keys *1515, the default PIN, the system prompts:
"System Programming"
the user keys 9 and the system responds:
"Unit Charge"
the user then keys ta unit charge between 1 and 99 corresponding to 1 to 99 pence per unit terminated with #. The system will confirm:
"20"
This unit charge need only be programmed when the logger option is available.

## DOOR CONTROL

Depression of the door control intercom button shall ring all extensions, when answered the answering extension shall be connected to the door intercom. Keying 0 shall operate the door latch.

## GENERALISED PERIPHERAL CONTROL

An MF controllable interface shall be available to external callers.
Having thus described the present invention in terms of a specific embodiment, it is to be well appreciated that the PBX described is exemplary only and that modifications and variations thereto could readily be made without departure from the spirit and scope of the present invention.

## Claims

1. A private branch exchange (PBX) telecommunications apparatus for small business or domestic applications, said apparatus comprising a solid state crosspoint switch matrix defining connection sites for a limited number of exchange lines and a greater number of extensions, a microprocessor having ROM and RAM facilities coupled to the switch matrix for determining the operation thereof under software control, dual tone multifrequency (DTMF) receivers and tone generators and a DTMF generator coupled to the switch matrix and to the microprocessor to be controlled thereby, a plurality of extension port circuits each coupled to a respective extension connection site of the switch matrix, and controls for said extension port circuits coupled to the microprocessor.

2. A PBX telecommunications apparatus as claimed in claim 1 wherein said switch matrix provides for the connection thereto of one or two exchange lines and up to eight extensions.

3. A PBX telecommunications apparatus as claimed in claim 1 or 2 wherein a speech synthesizer is coupled to said matrix switch and is further coupled to the microprocessor to be controlled thereby.

4. A PBX telecommunications apparatus as claimed in any of the preceding claims wherein intercom circuits are coupled to said switch matrix for coupling to intercom facilities such as a baby alarm for example.

5. A PBX telecommunications apparatus as claimed in any of the preceding claims wherein the microprocessor has a port for connection thereto of a call logging or general peripheral facility.

6. A PBX telecommunications apparatus as claimed in any of the preceding claims wherein the microprocessor has one or more ports for connection thereto of an alarm facility and/or a door control facility.

7. A PBX telecommunications apparatus as claimed in any of the preceding claims wherein one of the extensions is designated as a "master" extension and means are provided for connecting such master extension to the exchange line in the event of a power failure.

8. A PBX telecommunications apparatus as claimed in any of the preceding claims wherein a ring generator is coupled to the extension port circuits, a ringing control latch is coupled to the extension port circuits and to the microprocessor to be controlled thereby, and buffers are connected to the extension port circuits and to the microprocessor to be controlled thereby, and a bank of status indicators is coupled to said control latch and buffers and to said microprocessor to be controlled thereby.

9. A PBX telecommunications apparatus as claimed in any of the preceding claims which is adapted and arranged to provide access to incoming or outgoing exchange line telephone calls from multiple extension telephone sites and to provide intercom facilities between the extension sites, and additionally to provide a plurality of call management facilities selected from or including the following, namely: call diversion, call transfer, alarm calls, delayed automatic redialling, abbreviated dialling of stored numbers, call holding, call waiting alerts and call intrude.

10. A private branch exchange (PBX) telecommunications apparatus for small business or domestic applications, said apparatus comprising a solid state crosspoint switch matrix defining connection sites for a limited number of exchange lines and a greater number of extensions, a microprocessor coupled to the switch matrix for determining the operation thereof to provide a plurality of user selectable features, call signalling means coupled to the switch matrix and to the microprocessor to be controlled thereby, a plurality of extension port circuits each coupled to a respective extension connection site of the switch matrix, and controls for said extension port circuits coupled to the microprocessor.

# FIG.1

EP 0 454 421 A2